# EUROPEAN PATENT APPLICATION

(11) **EP 1 852 865 A1**
(43) Date of publication of application: **07.11.2007**
(21) Application number: 06713871.9
(22) Date of filing: 16.02.2006
(51) Int. Cl.: G11B 20/12, G11B 20/10, H04N 5/92, H04N 7/26

(54) **METHOD FOR RECORDING VIDEO DATA ONTO TWO-LAYER RECORDING DISC AND TWO-LAYER RECORDING DISC RECORDER**

(30) Priority: 17.02.2005 JP 2005040353
(71) Applicant: Pioneer Corporation, Tokyo 153-8654 (JP)
(72) Inventor: HORA, Takashi, anazono 4-chome, Tokorozawa-shi, Saitama (JP)
(74) Representative: Haley, Stephen
(86) International application number: PCT/JP2006/302730
(87) International publication number: WO 2006/088091

(57) **Abstract**

In order to record the closed GOP at the head of a recording area in the second layer of a dual-layer recording disk, dummy data is recorded into the head of a space recording area in the first layer of the dual-layer recording disk.

## Description

### Technical Field

The present invention relates to a method of and apparatus for recording video data onto a dual-layer recording disk, and a computer program.

### Background Art

There are three types of structures for the recording layer of a DVD-ROM (DVD Read Only Memory), which is a read-only DVD. That is, a single sided single layer type, a single sided dual layer type, and a double sided single layer each type. On the other hand, there are two types of structures for the recording layer of a DVD-R (DVD Recordable), which is a write-once type DVD. That is, a single sided single layer type and a double sided single layer each type. Now, a DVD-R of a single sided double layer type (hereinafter referred to as a "dual-layer DVD-R") is under development.

In general, a compression method according to the MPEG standard (hereinafter referred to a "MPEG method") is used when video images are recorded in a DVD video format. Under the MPEG method, video images are recorded as image data in each frame or field. The MPEG method employs a method in which certain image data is expressed by using a difference between the image data and past or future image data, i.e. predictive coding. Under the predictive coding, each image data is converted to any data of an I-picture (Intra-picture), a P-picture (Predictive-picture), and a B-picture (Bidirectionally predictive-picture), and it is then recorded.

MPEG video data is a video data string obtained by appending control information or management information to a plurality of image data, which are converted to any one of the I-picture, the P-picture, and the B-picture. The video data string can be divided into data groups, each of which is referred to as a GOP (Group Of Pictures). In other words, it can be said that the MPEG video data is a video data string in which a plurality of GOPs are arranged. Normally, one GOP includes 15 frames of image data.

The GOP includes an open GOP and a closed GOP. The open GOP includes the image data in which images cannot be reproduced completely without reference to the image data included in another GOP. The closed GOP does not include the image data in which images cannot be reproduced completely without reference to the image data included in another GOP. In other words, two B-pictures which are located at the head of the open GOP cannot be decoded without reference to the P-picture which is located in the tail of the previous GOP (or GOP located one before) of the GOP including the B-pictures. Therefore, it is necessary to refer to the previous GOP whenever the open GOP is decoded. In contrast, all the B-pictures and P-pictures included in the closed GOP can be decoded with reference to the I-picture or P-picture included in the GOP including the aforementioned B-pictures and P-pictures. Therefore, normally, it is unnecessary to refer to another GOP when the closed GOP is decoded.

When video images are recorded onto a DVD-R of a single sided single layer type in the DVD video format and the MPEG method, normally, only the GOP located at the head of the MPEG video data is set as the closed GOP, and all the subsequent GOPs are set as the open GOPs.

### Disclosure of Invention

### Subject to be Solved by the Invention

Currently, a DVD recorder with a built-in hard disk drive is widespread. The DVD recorder can receive video data transmitted by television broadcast or the like and record the received video data (hereinafter referred to "received video data") onto a hard disk by using the built-in hard disk drive. Moreover, such a DVD recorder has a function of reading the video data recorded on the hard disk and recording it onto a DVD-R or other write-once type or rewritable type DVDs. That is, a dubbing (or copy) function.

When the dual-layer DVD-R is provided in the market, it is desired to provide the functions of reading the video data recorded on the hard disk and continuously recording it onto the dual-layer-DVD-R for the DVD recorder with a built-in hard disk drive. The single sided single layer DVD-R has a recording capacity of 4.7GB. In contrast, the dual-layer DVD-R has a recording capacity of 8.5GB. Therefore, the provision of the function of continuously recording the video data onto the dual-layer DVD-R allows prolonged video contents to be stored on one recording disk.

There is, however, the following problem in order to realize the function of continuously recording the video data onto the dual-layer DVD-R. That is, on the DVD recorder with a built-in hard disk drive, the received video data is encoded to the MPEG video data by an encoder apparatus disposed in the DVD recorder. Then, the MPEG video data is recorded onto the hard disk by the built-in hard disk drive. At this time, in the MPEG video data encoded by the encoder apparatus, only the GOP located at the head of the MPEG video data is the closed GOP, and all the subsequent GOPs are the open GOPs. When the video data which is recorded on the hard disk in the MPEG method and whose data size is greater than the recording capacity of a first layer (layer 0) of the dual-layer DVD-R is read from the hard disk and is continuously recorded onto an unused dual-layer DVD-R, a change in the recording layer (hereinafter referred to as a "layer-change /layer-jump") is made in the middle of the recording process. As a result, the video data of the open GOP is recorded into the head of a recording area of a second layer (layer 1). As described above, the two B-pictures which are located at the head of the open GOP cannot be decoded without reference to the P-picture which is located in the tail of the previous GOP of the GOP including the B-pictures. Therefore, in order to decode the GOP recorded at the head of the recording area in the second layer, it is necessary to make the layer-change and refer to the GOP located in the tail of the video data recorded in the first layer. However, making the layer-change again reduces swiftness and continuity of the decoding process. As a result, there possibly arises a problem that reproduced video images are temporarily stopped (or frozen) upon the layer-change.

On the other hand, in order to maintain the swiftness and continuity of the decoding process, it is also considered that the decoding process is forced to be continued with disregard to the undecodability of the two B-pictures located at the head of the recording area in the second layer. Performing such a process, however, causes a lack of video images immediately after the layer-change, resulting in a disturbance of the reproduced video images.

In order to solve the above-exemplified problems, it is therefore a first object of the present invention to provide a method of and an apparatus for recording video data onto a dual-layer recording disk and a computer program, which can realize quick and complete decoding of video data, which is continuously recorded on a write-once or rewritable type recording disk with two or more recording layers on a single side, such as a dual-layer DVD-R.

It is a second object of the present invention to provide a method of and an apparatus for recording video data onto a dual-layer recording disk and a computer program, which can prevent, upon the layer-change, a lack of the partial reproduced video images of video data, which is continuously recorded on a write-once or rewritable type recording disk with two or more recording layers on a single side.

It is a third object of the present invention to provide a method of and an apparatus for recording video data onto a dual-layer recording disk and a computer program, which can prevent, upon the layer-change, a disturbance of the reproduced video images of video data, which is continuously recorded on a write-once or rewritable type recording disk with two or more recording layers on a single side.

### Means for Solving the Object

The above object of the present invention can be achieved by a first recording method of recording a video data string onto a dual-layer recording disk, the video data string including a plurality of independent data groups and a plurality of dependent data groups which are arranged in a predetermined order, each of the independent data groups having a plurality of image data which do not include image data in which images cannot be reproduced completely without reference to image data included in another data group, each of the dependent data groups having a plurality of image data which include image data in which images cannot be reproduced completely without reference to image data included in another data group, the recording method provided with: a selecting process of comparing a data size of a data string arrayed from a head of the video data row to immediately before each of the independent data groups with a size of a space recording area in a first layer of the dual-layer recording disk and of selecting a data string with a data size which is less than and minimally different from the size of the space recording area; a calculating process of calculating a difference between the data size of the data string selected in the selecting process and the size of the space recording area in the first layer of the dual-layer recording disk; a first recording process of recording dummy data with a data size corresponding to the difference, from the head of the space recording area in the first layer of the dual-layer recording disk; a second recording process of recording the data string selected in the selecting process, out of the video data string, into a recording area following the recording area in which the dummy data is recorded in the first layer of the dual-layer recording disk; and a third recording process of recording the data string arrayed from the independent data group disposed immediately after the data string selected in the selecting process to the tail of the video data string, out of the video data string, into a recording area in a second layer of the dual-layer recording disk.

The above object of the present invention can be also achieved by a first recording apparatus for recording a video data string onto a dual-layer recording disk, the video data string including a plurality of independent data groups and a plurality of dependent data groups which are arranged in a predetermined order, each of the independent data groups having a plurality of image data which do not include image data in which images cannot be reproduced completely without reference to image data included in another data group, each of the dependent data groups having a plurality of image data which include image data in which images cannot be reproduced completely without reference to image data included in another data group, the recording apparatus provided with: a selecting device for comparing a data size of a data string arrayed from a head of the video data row to immediately before each of the independent data groups with a size of a space recording area in a first layer of the dual-layer recording disk and of selecting a data string with a data size which is less than and minimally different from the size of the space recording area; a calculating device for calculating a difference between the data size of the data string selected in the selecting device and the size of the space recording area in the first layer of the dual-layer recording disk; a first recording device for recording dummy data with a data size corresponding to the difference, from the head of the space recording area in the first layer of the dual-layer recording disk; a second recording device for recording the data string selected in the selecting device, out of the video data string, into a recording area following the recording area in which the dummy data is recorded in the first layer of the dual-layer recording disk; and a third recording device for recording the data string arrayed from the independent data group disposed immediately after the data string selected in the selecting device to the tail of the video data string, out of the video data string, into a recording area in a second layer of the dual-layer recording disk.

The above object of the present invention can be also achieved by a first computer program for making a computer function as the first recording apparatus of the present invention.

The above object of the present invention can be also achieved by a second recording method of recording a video data string onto a dual-layer recording disk, the video data string including a plurality of closed GOPs (Group Of Pictures) and a plurality of open GOPs which are arranged in a predetermined order, the recording method provided with: a selecting process of comparing a data size of a data string arrayed from a head of the video data row to immediately before each of the independent data groups with a size of a space recording area in a first layer of the dual-layer recording disk and of selecting a data string with a data size which is less than and minimally different from the size of the space recording area; a calculating process of calculating a difference between the data size of the data string selected in the selecting process and the size of the space recording area in the first layer of the dual-layer recording disk; a first recording process of recording dummy data with a data size corresponding to the difference, from the head of the space recording area in the first layer of the dual-layer recording disk; a second recording process of recording the data string selected in the selecting process, out of the video data string, into a recording area following the recording area in which the dummy data is recorded in the first layer of the dual-layer recording disk; and a third recording process of recording the data string arrayed from the closed GOP disposed immediately after the data string selected in the selecting process to the tail of the video data string, out of the video data string, into a recording area in a second layer of the dual-layer recording disk.

The above object of the present invention can be also achieved by a second recording apparatus for recording a video data string onto a dual-layer recording disk, the video data string including a plurality of closed GOPs (Group Of Pictures) and a plurality of open GOPs which are arranged in a predetermined order, the recording apparatus provided with: a selecting device for comparing a data size of a data string arrayed from a head of the video data row to immediately before each of the independent data groups with a size of a space recording area in a first layer of the dual-layer recording disk and of selecting a data string with a data size which is less than and minimally different from the size of the space recording area; a calculating device for calculating a difference between the data size of the data string selected in the selecting device and the size of the space recording area in the first layer of the dual-layer recording disk; a first recording device for recording dummy data with a data size corresponding to the difference, from the head of the space recording area in the first layer of the dual-layer recording disk; a second recording device for recording the data string selected in the selecting device, out of the video data string, into a recording area following the recording area in which the dummy data is recorded in the first layer of the dual-layer recording disk; and a third recording device for recording the data string arrayed from the closed GOP disposed immediately after the data string selected in the selecting device to the tail of the video data string, out of the video data string, into a recording area in a second layer of the dual-layer recording disk.

The above object of the present invention can be also achieved by a second computer program for making a computer function as the second recording apparatus of the present invention.

The above object of the present invention can be also achieved by a first computer program product in a computer-readable medium for tangibly embodying a program of instructions executable by a computer, to make the computer function as the first recording apparatus of the preset invention. The above object of the present invention can be also achieved by a second computer program product in a computer-readable medium for tangibly embodying a program of instructions executable by a computer, to make the computer function as the second recording apparatus of the preset invention.

According to each of the computer program products of the present invention, the aforementioned first or second recording apparatus of the present invention can be embodied relatively readily, by loading the computer program product from a recording medium for storing the computer program product, such as a ROM (Read Only Memory), a CD-ROM (Compact Disc - Read Only Memory), a DVD-ROM (DVD Read Only Memory), a hard disk or the like, into the computer, or by downloading the computer program product, which may be a carrier wave, into the computer via a communication device. More specifically, the computer program product may include computer readable codes to cause the computer (or may comprise computer readable instructions for causing the computer) to function as the aforementioned first or second recording apparatus of the present invention.

### Brief Description of Drawings

[FIG. 1] FIG. 1 is an explanatory diagram showing a video data string.
[FIG. 2] FIG. 2 is an explanatory diagram showing management information about the position of a closed GOP.
[FIG. 3] FIG. 3 is a flowchart showing an embodiment of the recording method of the present invention.
[FIG. 4] FIG. 4 is an explanatory diagram showing a selecting process in the embodiment of the recording method of the present invention.
[FIG. 5] FIG. 5 is an explanatory diagram showing a calculating process in the embodiment of the recording method of the present invention.
[FIG. 6] FIG. 6 is an explanatory diagram showing a first recoding process in the embodiment of the recording method of the present invention.
[FIG. 7] FIG. 7 is an explanatory diagram showing a second recoding process and a third recording process in the embodiment of the recording method of the present invention.
[FIG. 8] FIG. 8 is an explanatory diagram showing one example of the state that the video data string is recorded on a dual-layer recording disk by the embodiment of the recording method of the present invention.
[FIG. 9] FIG. 9 is an explanatory diagram showing another example of the state that the video data string is recorded on a dual-layer recording disk by the embodiment of the recording method of the present invention.
[FIG. 10] FIG. 10 is a block diagram showing a DVD recorder with a built-in hard disk which is an example of the recording method of the present invention.
[FIG. 11] FIG. 11 is a flowchart showing a dubbing or copy operation in the example of the recording method of the present invention.

### Description of Reference Codes

- 11: video data string
- 12: closed GOP (independent data unit)
- 13: open GOP (dependent data unit)
- 21: dual-layer recording disk
- 31: dummy data
- 104: controller
- 110: DVD recorder
- 114: dual-layer DVD-R

### Best Mode for Carrying Out the Invention

Hereinafter, the embodiments of the present invention will be explained in each embodiment with reference to the drawings.

### (Recording Method)

An embodiment of the recording method of the present invention applies the recording method of the present invention if a video data string encoded in the MPEG method is recorded onto a dual-layer recording disk. In other words, the embodiment of the recording method of the present invention is a method of recording a video data string in which a plurality of closed GOPs and a plurality of open GOPs are arranged in a predetermined order, onto a dual-layer recording disk.

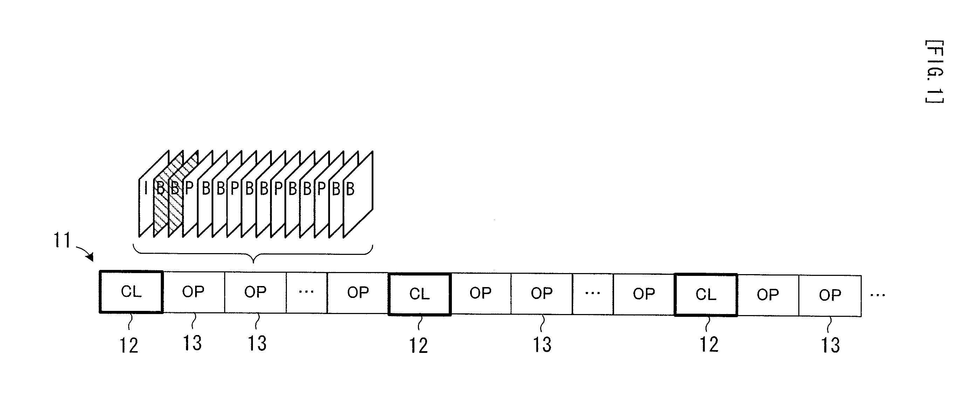

FIG. 1 shows one example of a video data string in which a plurality of closed GOPs and a plurality of open GOPs are arranged in a predetermined order. A video data string 11 is an array of data with coded video images. The video data string is composed of a plurality of image data. Each image data is data in which one frame or one field of images, which constitute video images, is coded. The MPEG method employs predictive coding. Under the predictive coding, each image data is any of an I-picture, a P-picture, and a B-picture. For example, 15 frames of image data are grouped into one GOP. The GOP includes an open GOP and a closed GOP. The open GOP includes the image data in which images cannot be reproduced completely without reference to the image data included in another GOP. In other words, two B-pictures which are located at the head of the open GOP cannot be decoded without reference to the P-picture which is located in the tail of the previous GOP (or GOP located one before) of the GOP including the B-pictures. Therefore, it is necessary to refer to the previous GOP whenever the open GOP is decoded. In contrast, the closed GOP does not include the image data in which images cannot be reproduced completely without reference to the image data included in another GOP. In other words, all the B-pictures and P-pictures included in the closed GOP can be decoded with reference to the I-picture or P-picture included in the GOP including the aforementioned B-pictures and P-pictures. Therefore, normally, it is unnecessary to refer to another GOP when the closed GOP is decoded. As shown in FIG. 1, in the video data string 11, a closed GOP 12 is disposed at the head, and subsequently, open GOPs 13 are disposed. After that, one closed GOP 12 is disposed at intervals of one or more open GOPs 13. For example, in one case, one closed GOP 12 is disposed at intervals of 20 open GOPs 13, and in another case, one closed GOP 12 is disposed at intervals of 60 open GOPs 13. In FIG. 1, "CL" means the closed GOP, and "OP" means the open GOP. Incidentally, the GOP is a specific example of the data group. The open GOP is a specific example of the dependent data group. The closed GOP is a specific example of the independent data group.

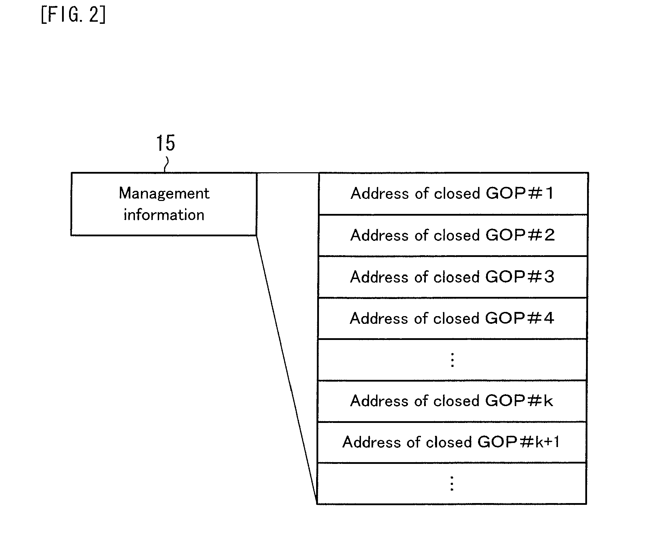

FIG. 2 shows management information. Management information 15 is information indicating the position of each closed GOP in the video data string. For example, the management information 15 is information indicating the relative address of each closed GOP arranged in the video data string. The management information 15 is used to recognize the position of each closed GOP in the video data string, in a selecting process or the like described later. Incidentally, if a flag indicating whether each GOP is the open GOP or the closed GOP is described in a header appended to each GOP, the flag can be used to investigate the position of each closed GOP in the video data string. In such a case, the management information 15 is not always necessary. Even in such a case, however, the management information 15 may be provided and used. This allows easy and quick recognition of the position of the closed GOP in the video data string.

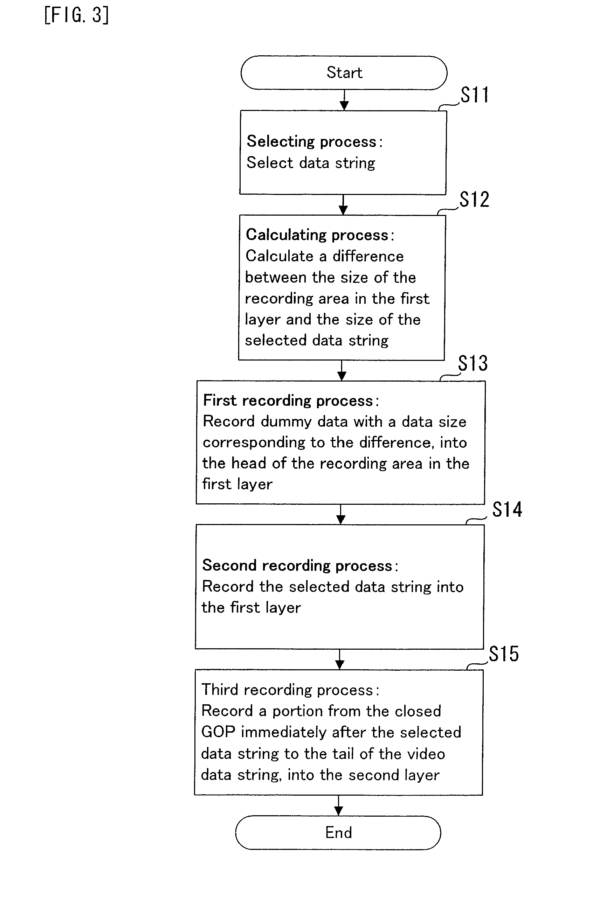

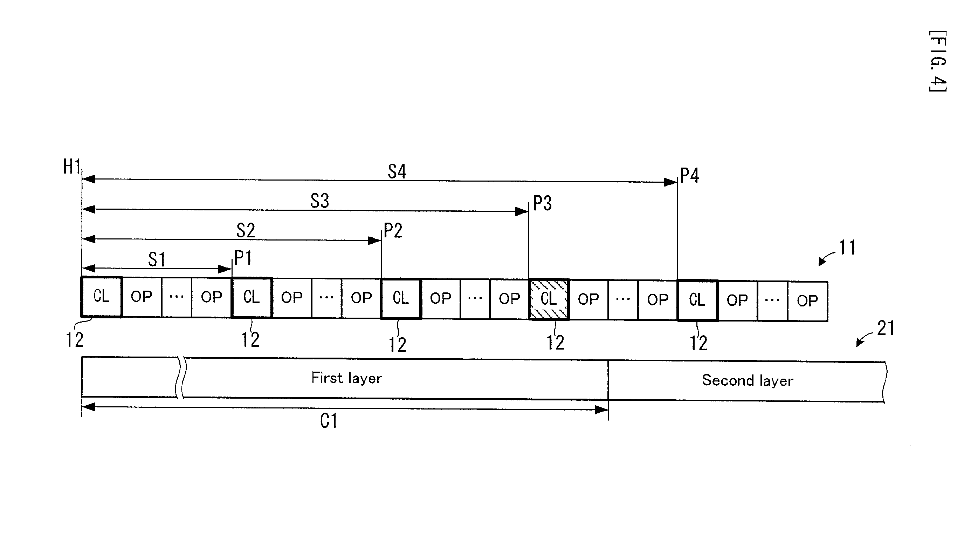

FIG. 3 shows a flow of a recording method in the embodiment of the present invention. Each of FIG. 4 to FIG. 8 shows one example of respective one process content of the recording method.

As shown in FIG. 3, the recording method is provided with : a selecting process S11; a calculating process S12; a first recording process S13; a second recording process S14; and a third recording process S15.

In the selecting process S11, as shown in FIG. 4, data size S1, S2, S3, or S4 of the data string arrayed from a head H1 of the video data string 11 to P1, P2, P3, or P4, located immediately before each closed GOP 12, is compared with a size C1 of a space recording area in a first layer (layer 0) of a dual-layer recording disk 21. Then, the data string with the data size S3 is selected, wherein the data size S3 is less than and minimally different from the size C1 of the space recording area.

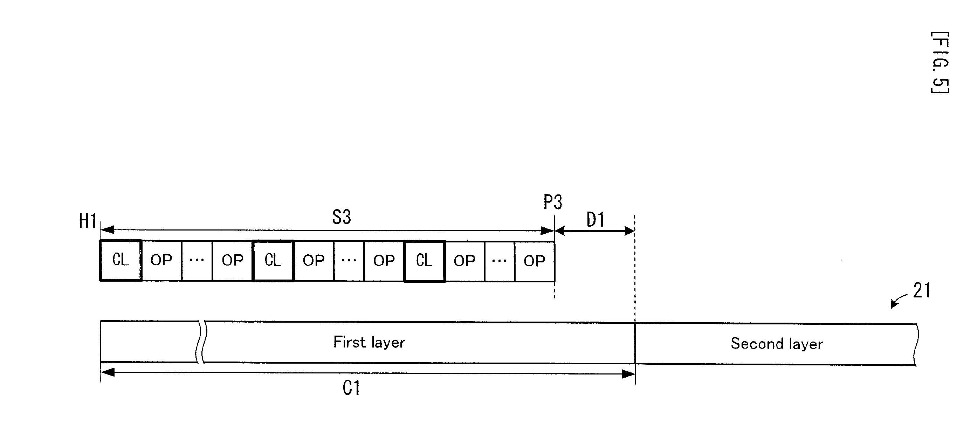

Then, in the calculating process S12, as shown in FIG. 5, a difference D1 between the data size S3 of the data string, selected in the selecting process S12, and the size C1 of the space recording area in the first layer of the dual-layer recording disk 21 is calculated.

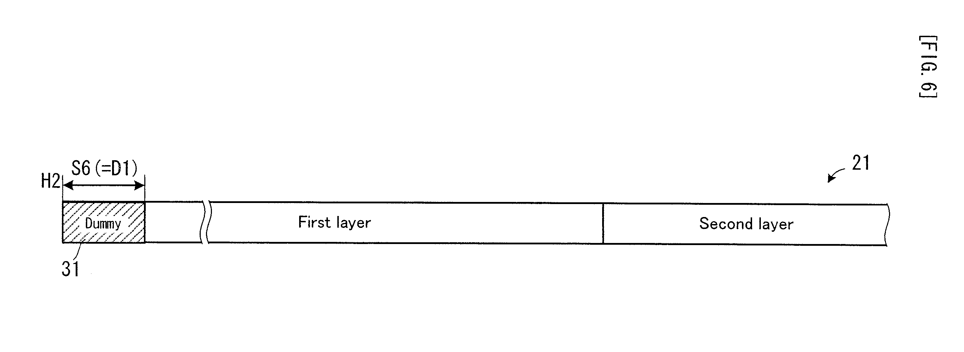

Then, in the first recording process S13, as shown in FIG. 6, dummy data 31 with a data size S6 corresponding to the difference C1, calculated in the calculating process S12, is recorded from a head H2 of the space recording area in the first layer of the dual-layer recording disk 21.

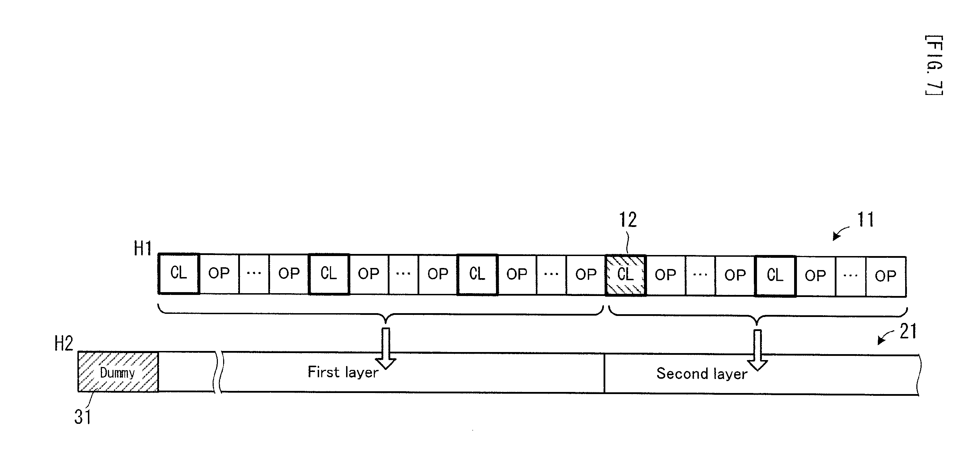

In the second recording process S14, as shown in FIG. 7, out of the video data string 11, the data string selected in the selecting process S11 is recorded into a recording area following the recording area in which the dummy data 31 is recorded in the first layer of the dual-layer recording disk 21.

Then, in the third recording process S15, the recording layer of the dual-layer recording disk 21 is changed from the first layer to a second layer (layer 1). Then, out of the video data string 11, the data string arrayed from the closed GOP 12 disposed immediately after the data string selected in the selecting process S11 to the tail of the video data string 11 is recorded into a recording area in the second layer of the dual-layer recording disk 21.

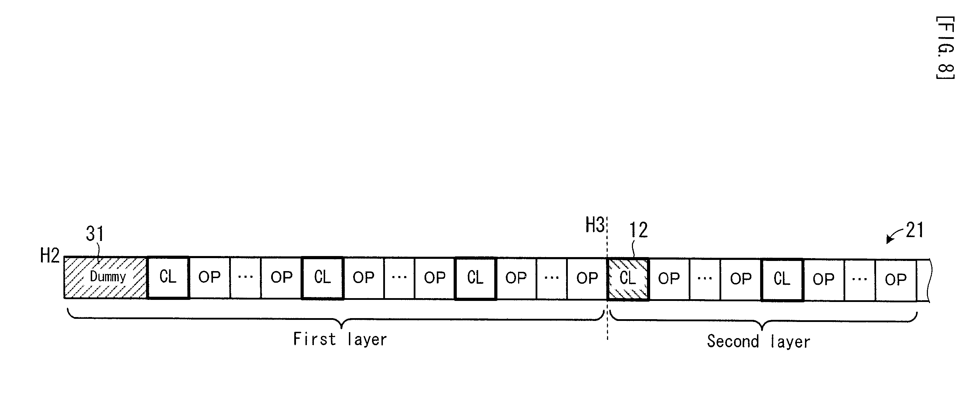

According to such a recording method, as shown in FIG. 8, the closed GOP is always disposed in a head H3 of the recording area in the second layer of the dual-layer recording disk 21. As described above, the closed GOP can be decoded without reference to another GOP. Therefore, even if the layer-change is made when the video data string recorded on the dual-layer recording disk 21 is decoded (or reproduced), it is possible to achieve quick and complete decoding and it is possible to prevent a lack of one portion of the reproduced video images upon the layer-change. As a result, it is possible to prevent a disturbance of the reproduced video images immediately after the layer-change.

Moreover, according to the recording method, as shown in FIG. 8, the image data is recorded to the tail of the recording area in the first layer. This allows the layer-change immediately after the video data string recorded at the tail of the recording area in the first layer is read when the video data string recorded on the dual-layer recording disk 21 is decoded (or reproduced), and this also allows the immediate start of the decoding of the video data string recorded at the head of the recording area in the second layer. Therefore, it is possible to prevent a lack of one portion of the reproduced video images upon the layer-change.

Furthermore, according to the recording method, as shown in FIG. 8, the tail of the data string recorded in the recording area in the first layer is always the tail of the GOP. Due to this, the layer-change is not made in the middle of an ECC (Error Correcting Code) block. Therefore, an error correction process can be surely performed.

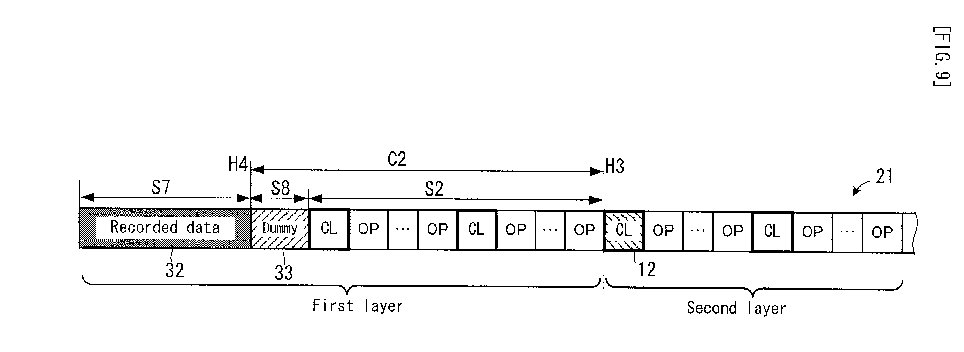

Incidentally, in the examples of the respective processes shown in FIG. 4 to FIG. 8, the space recording area in the first layer of the dual-layer recording disk 21 corresponds to all the recording areas in the first layer. That is, the examples refer to the case that the video data string is recorded onto the dual-layer recording disk 21 on which no data is recorded in the first layer. However, the recording method in the embodiment of the present invention can be applied even to the case that other data 32 is already recorded in one portion of the recording area in the first layer of the dual-layer recording disk 21, as shown in FIG. 9. In this case, a head H4 of the space recording area in the first layer corresponds to immediately after the tail of the data 32. Moreover, a size C2 of the space recording area in the first layer varies depending on a data size S7 of the data 32. In response to this, the selecting process S11 selects, for example, the data string with the data size S2 which is less than and minimally different from the size C2 of the space recording area (refer to FIG. 4). Then, the calculating process S12 calculates a difference between the data size S2 of the data string, selected in the selecting process S11, and the size C2 of the space recording area in the first layer of the dual-layer recording disk 21. Then, the first recording process S13 records dummy data 33 with a data size S8 corresponding to the difference calculated in the calculating process S12, from the head H4 of the space recording area in the first layer of the dual-layer recording disk 21. Moreover, the second recording process S14 records the data string selected in the selecting process S11, out of the video data string, into a recording area following the recording area in which the dummy data 33 is recorded in the first layer of the dual-layer recording disk 21. Then, the third recording process S15 changes the recording layer of the dual-layer recording disk 21 from the first layer to the second layer, and then records the data string arrayed from the closed GOP 12 disposed immediately after the data string selected in the selecting process S11 to the tail of the video data string, out of the video data string, into the recording area in the second layer of the dual-layer recording disk 21.

### (Recording Apparatus)

An embodiment of the recording apparatus of the present invention will be explained. The recording apparatus in the embodiment of the present invention applies the recording apparatus of the present invention if a video data string encoded in the MPEG method is recorded onto a dual-layer recording disk. In other words, the embodiment of the recording apparatus of the present invention is an apparatus for recording a video data string in which a plurality of closed GOPs and a plurality of open GOPs are arranged in a predetermined order, onto a dual-layer recording disk.

The recording apparatus is provided with: a selecting device; a calculating device; a first recording p device; a second recording device; and a third recording device. The selecting device compares a data size of a data string arrayed from a head of the video data row to immediately before each closed GOP with a size of a space recording area in a first layer of the dual-layer recording disk and of selecting a data string with a data size which is less than and minimally different from the size of the space recording area. The calculating device calculates a difference between the data size of the data string selected in the selecting device and the size of the space recording area in the first layer of the dual-layer recording disk. The first recording device records dummy data with a data size corresponding to the difference, from the head of the space recording area in the first layer of the dual-layer recording disk. The second recording device records the data string selected in the selecting device, out of the video data string, into a recording area following the recording area in which the dummy data is recorded in the first layer of the dual-layer recording disk. The third recording device changes the recording layer of the dual-layer recording disk from the first layer to a second layer and then records the data string arrayed from the closed GOP disposed immediately after the data string selected in the selecting device to the tail of the video data string, out of the video data string, into a recording area in the second layer of the dual-layer recording disk.

Each of the devices of the recording apparatus can be realized by a ROM (Read Only Memory) in which a control program which describes each process in the recording method of the present invention is stored, an arithmetic processing circuit for reading the control process from the ROM and executing it, a RAM (Random Access Memory), and a disk drive apparatus for a dual-layer recording disk.

Incidentally, by describing the control program which describes each process in the recording method of the present invention as a computer program and by making a computer read the computer program, it is possible to make the computer function as the recording apparatus of the present invention.

### Example

Hereinafter, an example of the present invention will be explained with reference to the drawings. In the following example, the encoding apparatus and the recording apparatus of the present invention are applied to a DVD recorder with a built-in hard disk drive. This is one preferable example to carry out the present invention.

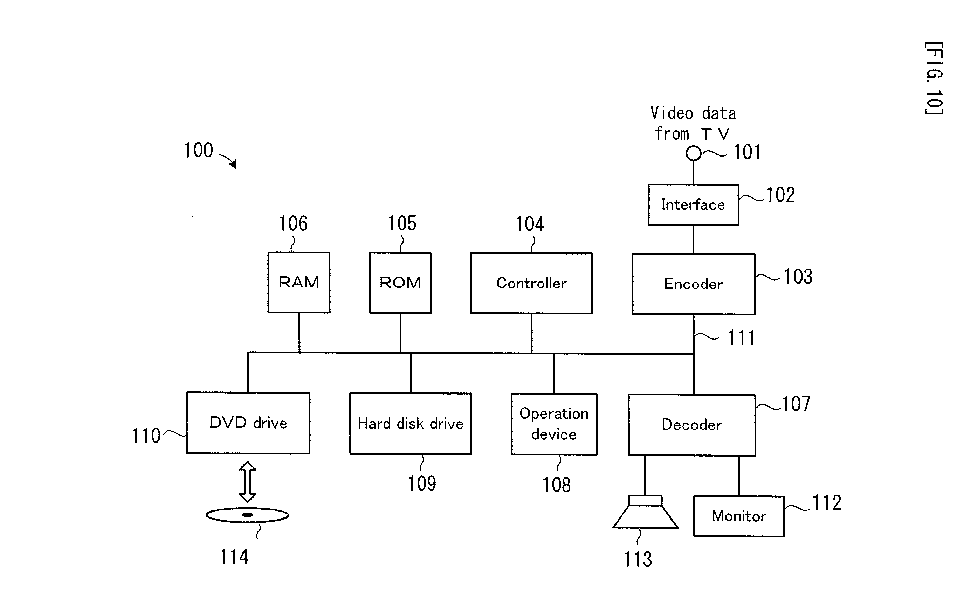

FIG. 10 shows a DVD recorder with a built-in hard disk drive, which is an embodiment of the present invention. As shown in FIG. 10, a DVD recorder 100 is provide with: an input terminal 101; an interface circuit 102; an encoder 103; a controller 104; a ROM 105; a RAM 106; a decoder 107; an operation device 108; a hard disk drive 109; and a DVD drive 110, which are connected to each other through a bus 111. Moreover, a monitor 112 and a speaker 113 are connected to the decoder 107.

The DVD recorder 100 has a function of recording video data transmitted from a television broadcast station or the like onto a hard disk built in the DVD recorder 100, i.e. a recording function. The recording operation is as follows. The video data transmitted from a television broadcast station or the like is inputted to the input terminal 101. The interface circuit 102 receives the video data and outputs it to the encoder 103. The encoder 103 generates a video data string on the basis of the received video data, wherein the video data string includes a plurality of closed GOPs and a plurality of open GOPs which are arranged in a predetermined order. At this time, the encoder 103 generates the video data string to dispose one closed GOP at intervals of one or more open GOPs (refer to FIG. 2). The encoder 103 also generates the management information indicating a position in which the closed GOP is disposed in the video data string (refer to FIG. 3). The video data string and the management information generated by the encoder 103 are supplied to the hard disk drive 109 through the bus 111. The hard disk drive 109 records the video data string and the management information onto the built-in hard disk.

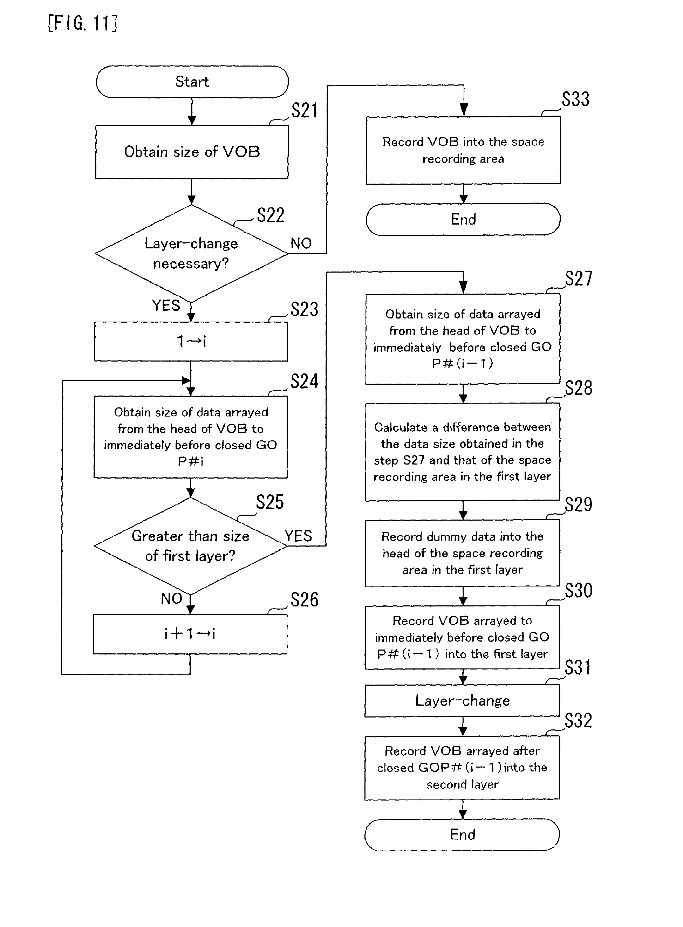

Moreover, the DVD recorder 100 has a function of reading the video data row recorded on the hard disk and recording it onto a dual-layer DVD-R 114, i.e. a dubbing (or copy) function. FIG. 11 shows the dubbing or copying operation of the DVD recorder 100.

When a user inserts the dual-layer DVD-R 114 into the DVD drive 110 and operates the operation device 108 to input an instruction to start the dubbing or copy, the controller 104 of the DVD recorder 100, as shown in FIG. 11, obtains the size of a certain VOB, which is a dubbing or copy target (step S21). Incidentally, the VOB in the example corresponds to the video data string. The VOB is a superior unit of video content data based on the DVD video format. Normally, the VOB includes a plurality of VOBUs, and the VOBU includes one or more GOPs. Then, the controller 104 compares the size of a space recording area in the first layer of the dual-layer DVD-R 114 with the size of the VOB. Then, the controller 104 judges whether or not the layer-change is necessary when the VOB is recorded onto the dual-layer DVD-R 114, on the basis of the comparison result (step S22).

If the layer-change is necessary (the step S22: YES), the controller 104 sets a counter value i to 1 (step S23). Then, the controller 104 refers to the management information recorded on the hard disk (refer to FIG. 3) and recognizes the position of the i-th closed GOP (which is the first closed GOP at the current time point). Then, the controller 104 obtains the data size of the data string arrayed from the head of the VOB to immediately before this closed GOP (step S24). Then, the controller 104 compares the obtained data size with the size of the space recording area in the first layer of the dual-layer DVD-R 114. Then, the controller 104 judges whether or not the data size is greater than the size of the space recording area in the first layer (step S25). If the data size is not greater than the size of the space recording area in the first layer (the step S25: NO), the controller 104 increases the counter value i by 1 (step S26). Then, the controller 104 repeats the process in the step S24 to the step S26 until the data size obtained in the step S24 becomes greater than the size of the space recording area in the first layer.

If the data size is greater than the size of the space recording area in the first layer (the step S25: YES), the controller 104 recognizes the position of the previous GOP (or GOP located one before) of the i-th GOP at the current time point, i.e. the (i-1)-th GOP, on the basis of the management information. Then, the controller 104 obtains the size of data arrayed from the head of the VOB to immediately before this closed GOP (step S27). Incidentally, the data string arrayed from the VOB to immediately before this closed GOP is a data string with a data size which is less than and minimally different from the size of the space recording area in the first layer of the dual-layer DVD-R 114.

Then, the controller 104 calculates a difference between the data size obtained in the step S27 and that of the space recording area in the first layer (step S28). Then, the controller 104 records dummy data with a data size corresponding to the difference, calculated in the step S28, from the head of the space recording area in the first layer (step S29).

Then, the controller 104 records the data string arrayed from the head of the VOB to immediately before the (i-1)-th closed GOP, out of the VOB, into a recording area following the recording area in which the dummy data is recorded in the first layer (step S30). This allows the data string to be recorded to the tail of the recording area in the first layer.

Then, the controller 104 issues a layer-change command to the DVD drive 110 (step S31). In response to this, the DVD drive 110 performs a layer-change process. Then, the controller 104 records the data string arrayed from the (i-1)-th GOP to the tail of the VOB, out of the VOB, into a recording area in the second layer of the dual-layer DVD-R (step S32). This allows the (i-1)-th GOP to be recorded at the head of the recording area in the second layer.

On the other hand, in the step S22, if the layer-change is not necessary (the step S22: NO), the controller 104 records the VOB into the space recording area in the first layer of the dual-layer DVD-R 114 (step S33). Incidentally, the VOB is recorded from the space area in the first layer in the example, but if the VOB is recorded onto a disk on which information is already recorded in the first layer, the VOB is recorded into a space area in the second layer. In other words, in the step S22, if it is judged that the layer-change is not necessary, the VOB is recorded into the space area in the first layer or the second layer.

According to the dubbing or copy operation, the closed GOP is recorded at the head of the recording area in the second layer. Therefore, even if the layer-change is made when the VOB recorded on the dual-layer DVD-R 114 is decoded (or reproduced), it is possible to achieve quick and complete decoding and it is possible to prevent a lack of one portion of the reproduced video images upon the layer-change. As a result, it is possible to prevent a disturbance of the reproduced video images immediately after the layer-change. Moreover, according to the dubbing or copy operation, the data string is recorded to the tail of the recording area in the first layer. Therefore, when the video data string recorded on the dual-layer DVD-R 114 is decoded (or reproduced), it is possible to prevent a lack of the reproduced video images upon the layer-change. Moreover, according to the dubbing or copy operation, the layer-change is made in the boundary position of the GOP. Thus, the ECC block does not cross between the first layer and the second layer. Therefore, the error correction can be surely performed.

Incidentally, in the present invention, various changes may be made without departing from the essence or spirit of the invention which can be read from the claims and the entire specification. A recording method, a recording apparatus, and a computer program which can realize these functions, which involve such changes, are also intended to be within the technical scope of the present invention.

### Industrial Applicability

The method of recording video data onto a dual-layer recording disk and the recording apparatus for a dual-layer recording disk according to the present invention can be applied to a recording apparatus, such as a DVD recorder, for recording video data onto a dual-layer DVD-R or the like. Moreover, they can be also applied to a recording apparatus or the like which is mounted on various computer equipment for consumer use or for commercial use, or which can be connected to various computer equipment.

## Claims

1. A recording method of recording a video data string onto a dual-layer recording disk, the video data string including a plurality of independent data groups and a plurality of dependent data groups which are arranged in a predetermined order, each of the independent data groups having a plurality of image data which do not include image data in which images cannot be reproduced completely without reference to image data included in another data group, each of the dependent data groups having a plurality of image data which include image data in which images cannot be reproduced completely without reference to image data included in another data group, said recording method comprising:
a selecting process of comparing a data size of a data string arrayed from a head of the video data row to immediately before each of the independent data groups with a size of a space recording area in a first layer of the dual-layer recording disk and of selecting a data string with a data size which is less than and minimally different from the size of the space recording area;
a calculating process of calculating a difference between the data size of the data string selected in said selecting process and the size of the space recording area in the first layer of the dual-layer recording disk;
a first recording process of recording dummy data with a data size corresponding to the difference, from the head of the space recording area in the first layer of the dual-layer recording disk;
a second recording process of recording the data string selected in said selecting process, out of the video data string, into a recording area following the recording area in which the dummy data is recorded in the first layer of the dual-layer recording disk; and
a third recording process of recording the data string arrayed from the independent data group disposed immediately after the data string selected in said selecting process to the tail of the video data string, out of the video data string, into a recording area in a second layer of the dual-layer recording disk.

2. The recording method according to claim 1, wherein in said selecting process, the data string is selected from the video data string in which one independent data group is disposed at intervals of one or more dependent data groups.

3. A recording apparatus for recording a video data string onto a dual-layer recording disk, the video data string including a plurality of independent data groups and a plurality of dependent data groups which are arranged in a predetermined order, each of the independent data groups having a plurality of image data which do not include image data in which images cannot be reproduced completely without reference to image data included in another data group, each of the dependent data groups having a plurality of image data which include image data in which images cannot be reproduced completely without reference to image data included in another data group, said recording apparatus comprising:
a selecting device for comparing a data size of a data string arrayed from a head of the video data row to immediately before each of the independent data groups with a size of a space recording area in a first layer of the dual-layer recording disk and of selecting a data string with a data size which is less than and minimally different from the size of the space recording area;
a calculating device for calculating a difference between the data size of the data string selected in said selecting device and the size of the space recording area in the first layer of the dual-layer recording disk;
a first recording device for recording dummy data with a data size corresponding to the difference, from the head of the space recording area in the first layer of the dual-layer recording disk;
a second recording device for recording the data string selected in said selecting device, out of the video data string, into a recording area following the recording area in which the dummy data is recorded in the first layer of the dual-layer recording disk; and
a third recording device for recording the data string arrayed from the independent data group disposed immediately after the data string selected in said selecting device to the tail of the video data string, out of the video data string, into a recording area in a second layer of the dual-layer recording disk.

4. The recording apparatus according to claim 3, wherein said selecting device selects the data string from the video data string in which one independent data group is disposed at intervals of one or more dependent data groups.

5. A recording method of recording a video data string onto a dual-layer recording disk, the video data string including a plurality of closed GOPs and a plurality of open GOPs which are arranged in a predetermined order, said recording method comprising:
a selecting process of comparing a data size of a data string arrayed from a head of the video data row to immediately before each of the independent data groups with a size of a space recording area in a first layer of the dual-layer recording disk and of selecting a data string with a data size which is less than and minimally different from the size of the space recording area;
a calculating process of calculating a difference between the data size of the data string selected in said selecting process and the size of the space recording area in the first layer of the dual-layer recording disk;
a first recording process of recording dummy data with a data size corresponding to the difference, from the head of the space recording area in the first layer of the dual-layer recording disk;
a second recording process of recording the data string selected in said selecting process, out of the video data string, into a recording area following the recording area in which the dummy data is recorded in the first layer of the dual-layer recording disk; and
a third recording process of recording the data string arrayed from the closed GOP disposed immediately after the data string selected in said selecting process to the tail of the video data string, out of the video data string, into a recording area in a second layer of the dual-layer recording disk.

6. The recording method according to claim 5, wherein in said selecting process, the data string is selected from the video data string in which one closed GOP is disposed at intervals of one or more open GOPs.

7. A recording apparatus for recording a video data string onto a dual-layer recording disk, the video data string including a plurality of closed GOPs and a plurality of open GOPs which are arranged in a predetermined order, said recording apparatus comprising:
a selecting device for comparing a data size of a data string arrayed from a head of the video data row to immediately before each of the independent data groups with a size of a space recording area in a first layer of the dual-layer recording disk and of selecting a data string with a data size which is less than and minimally different from the size of the space recording area;
a calculating device for calculating a difference between the data size of the data string selected in said selecting device and the size of the space recording area in the first layer of the dual-layer recording disk;
a first recording device for recording dummy data with a data size corresponding to the difference, from the head of the space recording area in the first layer of the dual-layer recording disk;
a second recording device for recording the data string selected in said selecting device, out of the video data string, into a recording area following the recording area in which the dummy data is recorded in the first layer of the dual-layer recording disk; and
a third recording device for recording the data string arrayed from the closed GOP disposed immediately after the data string selected in said selecting device to the tail of the video data string, out of the video data string, into a recording area in a second layer of the dual-layer recording disk.

8. The recording apparatus according to claim 7, wherein said selecting process selects the data string from the video data string in which one closed GOP is disposed at intervals of one or more open GOPs.
